(19) Europäisches Patentamt
European Patent Office
Office européen des brevets

(11) **EP 3 152 816 B1**

(12) **FASCICULE DE BREVET EUROPEEN**

(45) Date de publication et mention
de la délivrance du brevet:
**31.07.2019 Bulletin 2019/31**

(21) Numéro de dépôt: **15729551.0**

(22) Date de dépôt: **02.06.2015**

(51) Int Cl.:
***H02K 1/27*** *(2006.01)*

(86) Numéro de dépôt international:
**PCT/FR2015/051450**

(87) Numéro de publication internationale:
**WO 2015/185847 (10.12.2015 Gazette 2015/49)**

(54) **ROTOR A AIMANTS PERMANENTS A CONCENTRATION DE FLUX POUR MACHINE ELECTRIQUE TOURNANTE**

FLUSSKONZENTRATIONSROTOR MIT PERMANENTMAGNETEN FÜR EINE ELEKTRISCHE DREHMASCHINE

FLUX-CONCENTRATING ROTOR WITH PERMANENT MAGNETS FOR ROTARY ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2014 FR 1455111**

(43) Date de publication de la demande:
**12.04.2017 Bulletin 2017/15**

(73) Titulaire: **Valeo Equipements Electriques Moteur 94046 Créteil Cedex (FR)**

(72) Inventeurs:
• **BOUARROUDJ, Lilya**
  **F-94220 Charenton le Pont (FR)**
• **LEROY, Virginie**
  **F-93330 Neuilly sur Marne (FR)**
• **KIM, Nam-Gook**
  **F-94410 Saint-Maurice (FR)**

(56) Documents cités:
FR-A1- 2 982 093          FR-A1- 2 983 658
US-A1- 2013 009 505       US-A1- 2013 278 105

## Description

DOMAINE TECHNIQUE DE L'INVENTION

La présente invention concerne un rotor à aimants permanents pour machine électrique tournante.
Elle concerne également une machine électrique tournante comprenant un tel rotor.
Elle trouve une application particulière mais non limitative dans le domaine des moteurs électriques de traction ou des moteurs d'accessoires dans des véhicules automobiles électriques et hybrides.

ARRIÈRE-PLAN TECHNOLOGIQUE DE L'INVENTION

De par leurs performances accrues en termes de rendement et de puissance massique et volumique, les machines synchrones à aimants permanents trouvent aujourd'hui une large application dans le domaine des véhicules automobiles.
Ces machines électriques sont réalisables dans une large gamme de puissance et de vitesse et trouvent des applications aussi bien dans les véhicules de type « tout électrique » que dans les véhicules à bas CO$_2$ de types dits « mild-hybrid » et « full-hybrid » (en terminologie anglaise).
Les applications « mild-hybrid » concernent généralement des machines électriques de l'ordre de 8 à 20 kW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.
Les applications de type « full-hybrid» concernent généralement des moteurs de 30 à 50 kW pour des architectures de type série et/ou parallèle avec un niveau d'intégration plus abouti du ou des moteurs électriques dans la chaîne de traction du véhicule.
Des machines à aimants permanents aux terres rares tels que les aimants de type Néodyme-Fer-Bore (NeFeB), Samarium-Fer (SmFe), ou Samarium-Cobalt (SmCo) présentent de remarquables performances en terme de flux magnétique car les aimants aux terres rares peuvent présenter des rémanences dépassant le tesla.
Cependant, des machines à aimants permanents comprenant un rotor présentant une structure dite "à concentration de flux" ont permis d'obtenir des flux magnétiques importants avec des aimants de moindre rémanence, par exemples des aimants obtenus à partir de ferrites frittées ou liées.
La mise en oeuvre d'aimants aux terres rares dans un rotor de machine électrique destinée aux applications de l'automobile n'étant plus économiquement rentable, l'autre terme de l'alternative est donc constitué par les aimants basés sur des ferrites.
Mais le rémanent ou l'induction d'une ferrite étant plus faible que dans le cas d'un aimant aux terres rares, il était nécessaire d'augmenter le volume de l'aimant en ferrite pour obtenir un flux magnétique équivalent. Il a ainsi été proposé dans la demande de brevet FR2982093 un rotor à aimants permanents à concentration de flux ayant en partie une forme trapézoïdale qui permet d'augmenter le volume des aimants dans le rotor.
Les documents FR2982093 et US2013/009505 concernent un rotor à aimants permanents et signalent une épaisseur minimale (de la languette centrale), mais n'en donnent aucune valeur ni aucune relation numérique avec la hauteur des aimants.
Les documents US2013/278108 et FR2953658 concernent aussi un rotor à aimants permanents, où la géométrie trapézoïdale des aimants est optimisée afin de minimiser leur démagnétisation, mais ne divulguent pas de rapport entre la hauteur des aimants et l'épaisseur de la languette centrale. Cependant, il est toujours nécessaire d'optimiser les caractéristiques dimensionnelles et magnétiques de ce type de rotor de manière à améliorer le flux magnétique tout en respectant des contraintes dimensionnelles et mécaniques spécifiées.

DESCRIPTION GENERALE DE L'INVENTION

A cette fin l'invention propose un rotor pour machine électrique tournante comprenant une pluralité de pôles Nord et pôles Sud alternés et formés à partir d'une pluralité d'aimants permanents agencés dans des premiers évidements se prolongeant axialement et répartis régulièrement entre une partie circonférentielle et une partie centrale de la masse magnétique dudit rotor de manière à définir une pluralité de sections polaires circonférentielles, lesdits premiers évidements étant séparés par des languettes centrales d'épaisseur E, lesdits aimants permanents présentant une section radiale polygonale qui comporte une partie sensiblement rectangulaire proche de ladite partie circonférentielle adjacente à une partie sensiblement trapézoïdale proche de ladite partie centrale. Un rapport R0 d'une première hauteur h de ladite partie trapézoïdale sur l'épaisseur E d'une languette centrale est prédéterminé de manière à rendre maximum le rendement de ladite machine électrique, le rapport R0 étant compris entre 1,9 et 7.
L'optimisation du rapport R0 permet d'améliorer le rendement de la machine électrique et de respecter les contraintes mécaniques spécifiées notamment lorsque la machine électrique tourne à des vitesses élevées.
Selon des modes de réalisation non limitatifs, le rotor peut comporter en outre une ou plusieurs caractéristiques supplémentaires parmi les suivantes :
Selon un mode de réalisation non limitatif, le rapport R0 peut être compris entre 2 et 6.
Un tel rapport permet de minimiser les fuites de flux par la partie centrale du rotor tout en permettant de résister aux contraintes mécanique, notamment lorsque la machine électrique tourne à des vitesses élevées.

Selon un mode de réalisation non limitatif, le rapport R0 est compris entre 3 et 5.

Selon une première variante de réalisation non limitative, le rapport R0 est sensiblement égal à 3,14.

Selon une deuxième variante de réalisation non limitative, le rapport R0 est sensiblement égal à 4,44.

Selon une autre variante de réalisation non limitative, le rapport R0 peut être sensiblement égal à 5,36.

Un tel rapport R0 est particulièrement adapté aux machines pouvant atteindre des vitesses de rotation de l'ordre de 22000 tours par minute.

Un tel rapport R0 est encore adapté aux machines de forte puissance, par exemple des machines dont la puissance peut être comprise entre 10 KW et 60 KW.

Un tel rapport R0 est en outre adapté aux machines dont le diamètre extérieur du rotor est supérieur ou égal à 115 mm.

Ces différentes machines, sont par exemple des machines réversibles.

Un tel rapport permet, pour ces différentes machines électriques, de minimiser les fuites de flux par la partie centrale du rotor tout en permettant de résister aux contraintes mécanique, notamment lorsque la machine électrique tourne à ses vitesses maximales.

Selon un mode de réalisation non limitatif, un premier évidement débouche sur la partie circonférentielle par l'intermédiaire d'une ouverture séparant une section polaire circonférentielle d'une section polaire circonférentielle voisine, les deux sections polaires circonférentielles formant des premiers et deuxièmes pieds en regard et adaptés pour maintenir un aimant permanent dans ledit premier évidement, lesdits pieds comportant une face inférieure, lesdites sections polaires comportant deux faces longitudinales et présentant un évidement circulaire au niveau de la jonction entre chaque face longitudinale et la face inférieure d'un pied.

Selon un mode de réalisation non limitatif, un évidement circulaire prend naissance à la jonction de ladite face longitudinale et de ladite face inférieure et s'étend le long de la face longitudinale d'une section polaire.

Selon un mode de réalisation non limitatif, un évidement circulaire prend naissance à la jonction de ladite face longitudinale et de ladite face inférieure et s'étend le long de la face inférieure d'un pied.

Selon un mode de réalisation non limitatif, un évidement circulaire est défini de telle sorte que son centre se situe au niveau de la jonction de ladite face longitudinale d'une section polaire et de ladite face inférieure d'un pied.

Selon un mode de réalisation non limitatif, un rapport R1 du diamètre de l'évidement circulaire sur la hauteur d'un pied est compris entre 0,4 et 1.

Selon un mode de réalisation non limitatif, un rapport R2 de la hauteur d'un pied sur la largeur d'un pied est compris entre 0,4 et 2.

Selon une première variante de réalisation non limitative, le rapport R1 est sensiblement égal à 0,7 et le rapport R2 est sensiblement égal à 0,5.

Selon une deuxième variante de réalisation non limitative, le rapport R1 est sensiblement égal à 0,5 et le rapport R2 est sensiblement égal à 1,6.

Le rotor peut comporter dix aimants permanents, notamment douze aimants permanents.

Il est également proposé une machine électrique tournante comportant un rotor selon l'une quelconque des caractéristiques précédentes.

La machine électrique peut être refroidie par de l'huile.

Selon un premier mode de réalisation non limitatif, ladite machine électrique tournante est une machine réversible.

Selon un deuxième mode de réalisation non limitatif, ladite machine électrique tournante est un moteur de compresseur de climatisation électrique.

La machine électrique peut être du type ayant une puissance comprise entre 4 kW et 60 kW, notamment comprise entre 10 kW et 60 kW.

L'invention concerne également un rotor pour machine électrique tournante comprenant une pluralité de pôles Nord et pôles Sud alternés et formés à partir d'une pluralité d'aimants permanents agencés dans des premiers évidements se prolongeant axialement et répartis régulièrement entre une partie circonférentielle et une partie centrale de la masse magnétique dudit rotor de manière à définir une pluralité de sections polaires circonférentielles, lesdits premiers évidements étant séparés par des languettes centrales d'épaisseur E, lesdits aimants permanents présentant une section radiale polygonale qui comporte une partie sensiblement rectangulaire proche de ladite partie circonférentielle adjacente à une partie sensiblement trapézoïdale proche de ladite partie centrale. Un rapport R0 d'une première hauteur h de ladite partie trapézoïdale sur l'épaisseur E d'une languette centrale est prédéterminé de manière à minimiser les fuites de flux par la partie centrale tout en permettant de résister aux contraintes mécanique, notamment lorsque la machine électrique tourne à des vitesses élevées.

Les caractéristiques précédentes sont applicables seules ou en combinaison à cette invention.

L'invention a encore pour objet un système pour véhicule automobile, notamment hybride, comportant :

- la machine électrique telle que décrite précédemment,
- une pompe agencée pour amener dans la machine du fluide, notamment caloporteur, par exemple une huile, sous pression.

Le système peut comporter une boucle de refroidissement permettant de refroidir le fluide avant son entrée dans la machine par la pompe.

Le système peut comporter une boîte de vitesse, la pompe étant agencée pour amener en outre le fluide dans la boîte de vitesse.

Le système peut être configuré pour que la machine électrique actionne un arbre de la boîte de vitesse.

En variante, le système peut comporter un différentiel, la pompe étant agencée pour amener en outre le fluide dans le différentiel.

Le système peut être configuré pour que la machine électrique actionne un arbre du différentiel.

BREVE DESCRIPTION DES FIGURES

L'invention et ses différentes applications seront mieux comprises à la lecture de la description qui suit et à l'examen des Figures qui l'accompagnent.

- la Figure 1 représente une vue en coupe radiale simplifiée d'un rotor à aimants permanents selon un mode de réalisation non limitatif de l'invention ;
- la Figure 2 représente selon un premier mode de réalisation non limitatif la structure d'une partie d'une section polaire du rotor de la Figure 1 qui coopère avec un aimant permanent ;
- la Figure 3 représente selon un deuxième mode de réalisation non limitatif la structure d'une partie d'une section polaire du rotor de la Figure 1 qui coopère avec un aimant permanent ;
- la Figure 4 représente selon un troisième mode de réalisation non limitatif la structure d'une partie d'une section polaire du rotor de la Figure 1 qui coopère avec un aimant permanent ;
- la Figure 5 représente deux sections polaires du rotor de la Figure 3 qui coopèrent avec un aimant permanent.

DESCRIPTION DE MODES DE REALISATION DE L'INVENTION

Les éléments identiques, par structure ou par fonction, apparaissant sur différentes Figures conservent, sauf précision contraire, les mêmes références.

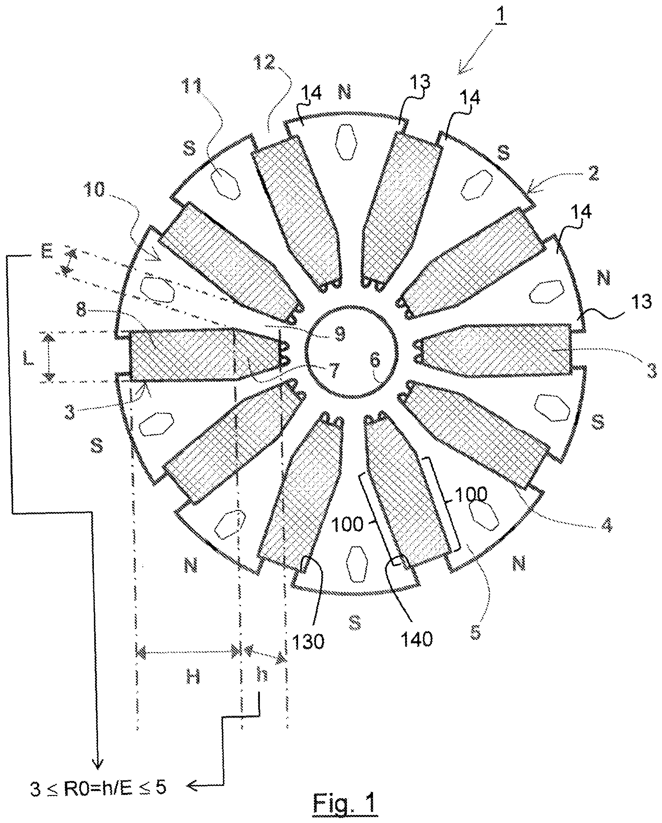

La coupe radiale simplifiée d'un rotor 1 à aimants permanents selon un mode de réalisation non limitatif, représentée sur la Figure 1, montre bien l'agencement dans la masse magnétique 2 des aimants permanents 3 dans des premiers évidements 4 répartis régulièrement entre une partie circonférentielle 5 et une partie centrale 6 de manière à former une pluralité de pôles Nord N et pôles Sud S alternés. Les aimants permanents sont en ferrites.

Une première réalisation concrète d'une machine comprenant un tel rotor est dans un exemple non limitatif un moteur à compresseur de climatisation électrique, ledit compresseur servant à assurer la circulation du fluide frigorigène dans le circuit frigorifique et participant au fonctionnement de la climatisation en comprimant le fluide lorsqu'il est en phase gazeuse.

Une deuxième réalisation concrète d'une machine comprenant un tel rotor est dans un exemple non limitatif un moteur/génératrice de 8 à 20 KW pour des applications dans des véhicules automobiles du type dits «mild-hybrid». La machine est dite réversible. Dans son mode de fonctionnement en moteur cette machine peut être conçue pour le démarrage du moteur thermique, l'assistance en couple du moteur thermique ainsi que pour la traction électrique à faible vitesse du véhicule.

Dans une forme de réalisation particulière de la machine non limitative illustrée sur la Figure 1, un rotor 1 comportant dix aimants permanents 3 tourne à l'intérieur d'un stator (non représenté) ayant une pluralité d'encoches. Les aimants 3 sont disposés de manière radiale de façon à obtenir une structure de rotor de type à concentration de flux. Le stator et le rotor 1 sont réalisés de manière classique avec des paquets de tôles métalliques formant des masses magnétiques 2. Dans un exemple non limitatif, la tôle Fer Silicium est utilisée.

Comme illustré sur la Figure 1, une partie de l'aimant 3 proche de la partie centrale 6 du rotor 1 comporte une forme en coin. De la sorte une section radiale d'un aimant 3 dans le rotor 1 présente une partie sensiblement trapézoïdale 7 proche de la partie centrale du rotor 1 et une partie sensiblement rectangulaire 8 proche de la partie circonférentielle 5.

Un premier évidement 4 débouche sur la partie circonférentielle 5 par l'intermédiaire d'une ouverture 12 séparant une section polaire circonférentielle 10 d'une section polaire circonférentielle voisine 10, les deux sections polaires circonférentielles 10 formant des premiers et deuxièmes pieds 13, 14 en regard et adaptés pour maintenir un aimant permanent 3 dans ledit premier évidement 4.

Les sections polaires 10 comprennent deux faces longitudinales 100 qui s'étendent de part et d'autre des aimants 3 et notamment de leur partie sensiblement rectangulaire 8, et les pieds 13, 14 associés comprennent une face inférieure 130, 140. Une face longitudinale 100 d'une section polaire 10 est perpendiculaire à la face inférieure d'un pied 13, 14.

Les premiers évidements 4 contenant les aimants 3 sont séparés par des languettes centrales 9 formant cloisons ayant une épaisseur E qui est choisie de valeur faible pour minimiser les fuites de flux par la partie centrale 6 du rotor. Dans cette forme de réalisation particulière, l'épaisseur E est constante, mais on notera qu'elle pourra être variable dans certaines formes de réalisation. Ces languettes 9 maintiennent radialement les sections polaires 10 circonférentielles définies dans la masse magnétique 2 par les premiers évidements 4. Les sections polaires 10 maintenant elles-mêmes radialement les aimants 3, les languettes 9 doivent présenter une résistance mécanique minimale pour résister aux efforts centripètes résultant de l'effet de la rotation du rotor 1 sur les aimants 3 et les sections polaires 10. L'épaisseur E des languettes doit donc être suffisante pour leur permettre de résister aux contraintes mécaniques $\sigma$, et notamment lorsque la machine électrique tourne à des vitesses élevées.

Le rotor 1 comprend en outre une pluralité de seconds évidements 11 agencés dans les sections polaires 10 comme le montre bien la Figure 1. Outre leur fonction de contribuer au contrôle du champ magnétique dans le rotor 1, ces seconds évidements 11 diminuent la masse des sections polaires 10, et, par conséquent, diminuent les contraintes mécaniques σ supportées par les languettes 9 dues à ces sections polaires 10, ce qui permet d'accroître concurremment la masse des aimants 3.

Des essais avec des machines électriques comprenant un rotor 1 ayant des aimants 3 en forme de coin, et des simulations sur ordinateur, ont conduit l'entité inventive à considérer qu'un rapport R0 d'une première hauteur h de ladite partie trapézoïdale 7 sur l'épaisseur E d'une languette centrale 9, est un paramètre qui permet d'optimiser le rendement de la machine et de dimensionner des aimants permanents de rotor 1 adaptées aux machines électriques qui tournent à des vitesses élevées.

Les essais réalisés ont montré qu'un rapport R0 compris entre 3 et 5 permettait d'obtenir des résultats satisfaisants pour les aimants 3 et languettes centrales 9 en terme de tenue aux forces centrifuges s'exerçant dans la gamme de vitesse de 0 à 22000 rpm (rotations par minute).

On notera que l'épaisseur E d'une languette 9 est imposée par les contraintes mécaniques σ selon la formule suivante :

$$\sigma = F / V = (m \times Ra \times w2 / pp) / (E \times L)$$

$$\text{soit} \quad E = (m \times Ra \times w2 / pp) / (\sigma \times L) \; [1],$$

avec F la force centrifuge (F = m x Ra x w^2), m la masse aimant plus fer, Ra le rayon par rapport au centre de gravité du rotor, w la vitesse angulaire (rd/s) pp le nombre de paire de pôles, V le volume de la languette, σ les contraintes mécaniques et L la longueur du rotor.

Par ailleurs, on notera que le rapport R0 est défini au niveau électrotechnique par h/E = (Bs+Bp) / ($B_{aim}$ x 2) [2], avec Bs l'induction magnétique à saturation dans la languette, Bp l'induction magnétique à saturation dans la section polaire, $B_{aim}$ l'induction rémanente de l'aimant. On notera que $B_{aim}$ dépend de la température de l'aimant ferrite.

En partant de la formule [2], on détermine le rapport RO=h/E, puis avec la formule [1], on détermine l'épaisseur E. On en déduit ainsi la hauteur h. Ainsi, prenons comme exemple non limitatif un aimant ferrite où Bs = 2.2T et Bp = 1.8T.

Dans le cas d'un rotor 1 pour moteur de compresseur électrique (vitesse aux alentours de 10000rpm), on obtient le rapport RO=h/E = 4,44 avec $B_{aim}$ = 0.45T pour une température aimant ferrite de 25°C. Dans ce cas, la machine est bien refroidie par le réfrigérant du compresseur.

Dans le cas d'un rotor 1 pour machine réversible (vitesse aux alentours de 16000rpm), on obtient le rapport RO=h/E = 3,14 avec $B_{aim}$ = 0.35T pour une température aimant ferrite de 120°C. Dans ce cas, la machine est refroidie par l'huile de la boîte de vitesse du véhicule automobile.

Dans le cas d'un rotor 1 de machine électrique réversible (vitesse de rotation pouvant atteindre de sensiblement 18000 tours par minute à 22000 tours par minute), on obtient le rapport RO=h/E = 5,36 avec Baim compris entre 0,4T et 0,5T pour une température aimant ferrite de 90°C. Une telle machine électrique peut être refroidie par de l'huile, par exemple en provenance d'une boîte de vitesse ou d'un différentiel du véhicule automobile.

Des essais avec des machines électriques comprenant un rotor 1 ayant des aimants 3 en forme de coin, et des simulations sur ordinateur, ont conduit l'entité inventive à s'apercevoir que des contraintes mécaniques importantes σ1 due à la force centrifuge s'exerçant sur les aimants se concentraient au coin des aimants 32, à l'accroche des pieds 13,14.

Dans le but d'éviter une détérioration du rotor 1 due à ces efforts mécaniques importants, dans un mode de réalisation non limitatif, les sections polaires 10 présentent un évidement circulaire 18 au niveau de la jonction entre chaque face longitudinale 100 et la face inférieure 130, 140 d'un pied 13, 14. Une section polaire 10 comprend ainsi deux évidements 18. On notera qu'une jonction se fait au niveau d'un coin 32 d'un aimant permanent 3.

Grâce à ces évidements circulaires 18, on obtient une diminution des contraintes mécaniques. Cela permet ainsi de réduire la largeur L1 des pieds 13, 14 qui maintiennent un aimant 3 dans un évidement 4. Par ailleurs, la réduction de la largeur L1 des pieds 13, 14 a pour effet d'augmenter la largeur des ouvertures 12. Cette augmentation a pour effet de réduire le flux de fuites au niveau des ouvertures 12, et par conséquent d'augmenter le flux magnétique généré.

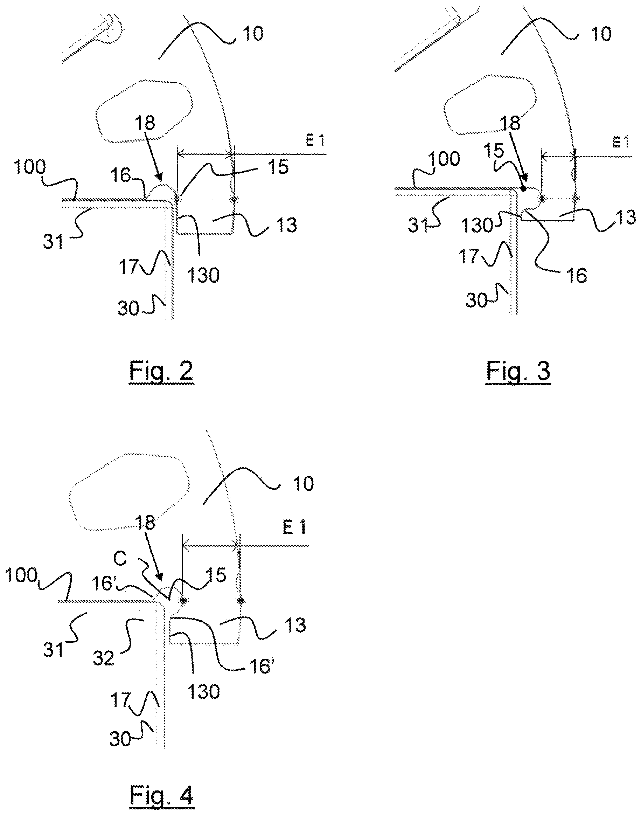

Différentes variantes de réalisation de cette évidement circulaire 18 sont illustrées sur les Figures 2 à 4 en coupe radiale et sont décrites ci-après. Sur ces Figures sont représentées une partie d'une section polaire 10 avec un de ses pieds 13, et une partie de l'aimant permanent 3. Bien entendu, ce qui est décrit ci-après s'applique également pour le deuxième pied 14.

Dans une première variante de réalisation non limitative illustrée sur la Figure 2, ledit évidement circulaire 18 prend naissance à la jonction 15 de la face longitudinale 100 et de la face inférieure 130 et s'étend le long de la face longitudinale 100 de la section polaire 100.

Comme on peut le voir sur la Figure, l'évidement circulaire 18 comprend une extrémité 16 qui se raccorde à la face longitudinale 100 de la section polaire 10 sans angle vif. Cela permet de ne pas avoir de point de fragilité au niveau mécanique.

Comme on peut le voir également, l'évidement circulaire 18 est tangent à une surface de contact avec le pied 13. Dans l'exemple illustré non limitatif, la surface de contact est la face supérieure d'une laminette 17 disposée entre la face supérieure 30 de l'aimant permanent 3 et la face inférieure 130 du pied 13. La laminette 17 a pour fonction de répartir les efforts mécaniques s'exerçant sur le haut de l'aimant 3 et le pied 13 et d'absorber par déformation un éventuel déplacement de l'aimant 3. Dans le cas où la machine est soumise à une vitesse de rotation très élevée, l'aimant 3 a en effet tendance à s'éloigner de l'axe de rotation du rotor, sous l'effet de la force centrifuge. Dans un autre exemple, dans le cas où il n'y a pas de laminette 17, la surface de contact est la face supérieure 30 de l'aimant 3. On notera que l'on peut prévoir de décaler l'évidement circulaire 18 suivant la largeur de l'aimant 3 ce qui permet de ne pas diminuer la surface d'appui du pied 13 sur l'aimant 3 et l'épaisseur E1 au dessus de l'aimant 3 (E1 qui correspond à la hauteur du pied 13).

Dans une deuxième variante de réalisation non limitative illustrée sur la Figure 3, ledit évidement circulaire 18 prend naissance à la jonction de ladite face longitudinale 100 et ladite face inférieure 130 et s'étend le long de la face inférieure 130, 140 du pied 13.

Comme on peut le voir sur la Figure, l'évidement circulaire 18 comprend une extrémité 16 qui se raccorde à la face inférieure 130 du pied 13 sans angle vif. Cela permet de ne pas avoir de point de fragilité au niveau mécanique.

Comme on peut le voir également, l'évidement circulaire est tangent à une surface perpendiculaire au pied 13. Dans l'exemple illustré non limitatif, la surface perpendiculaire est la face latérale de la laminette 17 qui est disposée entre la face latérale 31 de l'aimant permanent 3 et la face longitudinale 100 de la section polaire 10. Dans un autre exemple, dans le cas où il n'y a pas de laminette 17, la surface perpendiculaire est la face latérale 31 de l'aimant 3.

On notera que l'on peut prévoir de décaler l'évidement circulaire 18 suivant la hauteur de l'aimant 3, mais cela vient diminuer la surface d'appui du pied 13 sur l'aimant 3 et la hauteur E1 du pied 13.

Dans une troisième variante de réalisation non limitative illustrée sur la Figure 4, ledit évidement circulaire 18 est défini de telle sorte que son centre C se situe au niveau de la jonction de ladite face longitudinale 100 et de ladite face inférieure 130, 140. Comme on peut le voir, le centre C se trouve en regard du coin 32 de l'aimant 3.

Comme on peut le voir sur la Figure, l'évidement circulaire 18 comprend une première extrémité 16 qui se raccorde à la face inférieure 130 sans angle vif, et une deuxième extrémité 16' qui se raccorde à la face longitudinale 100 sans angle vif.

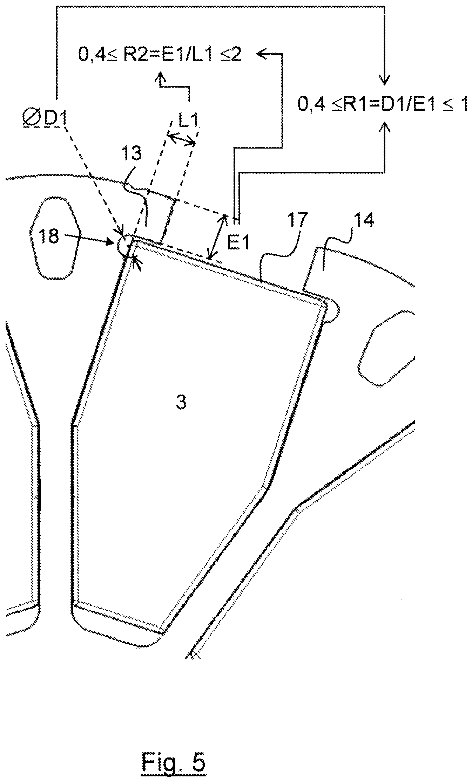

Des essais avec des machines électriques comprenant un rotor 1 ayant des aimants 3 en forme de coin, et des simulations sur ordinateur, ont conduit l'entité inventive à considérer qu'un rapport R1 du diamètre D1 de l'évidement circulaire sur la hauteur E1 d'un pied 13,14 (D1 et E1 étant illustrés sur la Figure 5) est un paramètre qui permet d'optimiser le rendement de la machine (maximisation du flux magnétique) tout en minimisant les contraintes mécaniques σ1. Il en de même avec un rapport R2 de la hauteur E1 d'un pied 13,14 sur la largeur L1 d'un pied 13,14 (L1 étant illustré sur la Figure 5).

Les essais réalisés ont montré qu'un rapport R1 (D1/E1) compris entre 0,4 et 1 et un rapport R2 (E1/L1) compris entre 0,4 et 2 permettaient d'obtenir un bon compromis entre un évidement circulaire optimale d'un point de vue magnétique et d'un point de vue mécanique.

Dans le cas d'un rotor 1 pour moteur de compresseur (comprenant une vitesse de rotation de 10000rpm dans un exemple non limitatif), on obtient dans un exemple non limitatif R1 = 0,7 et R2=0,5.

Dans le cas d'un rotor 1 pour alterno-démarreur (comprenant une vitesse de rotation de 18000rpm dans un exemple non limitatif), on obtient dans un exemple non limitatif R1=0,5 et R2=1,6.

Bien entendu la description de l'invention n'est pas limitée à l'application, aux modes de réalisation et aux exemples décrits ci-dessus. D'autres modes de réalisation basées sur des valeurs numériques différentes de celles spécifiées ci-dessus, et correspondant à d'autres essais ou simulation de machines électriques tournantes comportant un rotor de type décrit, ne sortiraient pas du cadre de la présente invention dans la mesure où ils résultent des revendications ci-après.

**Revendications**

1.  Rotor (1) pour machine électrique tournante comprenant une pluralité de pôles Nord (N) et pôles Sud (S) alternés et formés à partir d'une pluralité d'aimants permanents (3) agencés dans des premiers évidements (4) se prolongeant axialement et répartis régulièrement entre une partie circonférentielle (5) et une partie centrale (6) de la masse magnétique (2) dudit rotor (1) de manière à définir une pluralité de sections polaires circonférentielles (10), lesdits premiers évidements (4) étant séparés par des languettes centrales (9) d'épaisseur E, lesdits aimants permanents (3) présentant une section radiale polygonale qui comporte une partie sensiblement rectangulaire (8) proche de ladite partie circonférentielle (5) adjacente à une partie sensiblement trapézoïdale (7) proche de ladite partie centrale (6), de sorte qu'une partie de l'aimant permanent (3) proche de la partie centrale (6) du rotor comporte une forme en coin, lesdites languettes centrales (9) formant cloisons et l'épaisseur E étant constante, les sections polaires (10) comprenant deux faces longitudinales (100) qui s'étendent de part et d'autre de la partie sensiblement rectangulaire (8) des aimants (3), **caractérisé en ce qu'**un rapport RO=h/E d'une première hauteur h de ladite partie trapézoïdale (7) sur l'épaisseur E d'une languette centrale (9) est prédéterminé de manière à minimiser les fuites de flux par la partie centrale tout en permettant de résister aux contraintes mécaniques, notamment lorsque la machine électrique tourne à des vitesses élevées, le rapport R0 étant compris entre 1,9 et 7, notamment entre 2 et 6, par exemple entre 3 et 5.

2. Rotor selon la revendication 1, **caractérisé en ce que** le rapport R0 est sensiblement égal à 3,14.

3. Rotor selon la revendication 1, **caractérisé en ce que** le rapport R0 est sensiblement égal à 5,36.

4. Rotor selon l'une quelconque des revendications 1 à 3, **caractérisé en ce qu'**un premier évidement (4) débouche sur la partie circonférentielle (5) par l'intermédiaire d'une ouverture (12) séparant une section polaire circonférentielle (10) d'une section polaire circonférentielle voisine (10), les deux sections polaires circonférentielles (10) formant des premiers et deuxièmes pieds (13, 14) en regard et adaptés pour maintenir un aimant permanent (3) dans ledit premier évidement (4), lesdits pieds (13, 14) comportant une face inférieure (130, 140), lesdites sections polaires (10) comportant deux faces longitudinales (100) et présentant un évidement circulaire (18) au niveau de la jonction (15) entre chaque face longitudinale (100) et la face inférieure (130, 140) d'un pied (13, 14).

5. Rotor selon la revendication 4, **caractérisé en ce qu'**un évidement circulaire (18) prend naissance à la jonction (15) de ladite face longitudinale (100) et de ladite face inférieure (130, 140) et s'étend le long de la face longitudinale (100) de la section polaire (100).

6. Rotor selon la revendication 4, **caractérisé en ce qu'**un évidement circulaire (18) prend naissance à la jonction (15) de ladite face longitudinale (100) et de ladite face inférieure (130, 140) et s'étend le long de la face inférieure (130, 140) d'un pied (13, 14).

7. Rotor selon la revendication 4, **caractérisé en ce qu'**un évidement circulaire (18) est défini de telle sorte que son centre (C) se situe au niveau de la jonction (15) de ladite face longitudinale (100) d'une section polaire (10) et de ladite face inférieure (130, 140) d'un pied (13, 14).

8. Rotor selon l'une quelconque des revendications 5 à 7, **caractérisé en ce qu'**un rapport R1 du diamètre (D1) de l'évidement circulaire (18) sur la hauteur (E1) d'un pied (13,14) est compris entre 0,4 et 1.

9. Rotor selon l'une quelconque des revendications 4 à 8, **caractérisé en ce qu'**un rapport R2 de la hauteur (E1) d'un pied (13,14) sur la largeur (L1) d'un pied (13,14) est compris entre 0,4 et 2.

10. Rotor selon la revendication 8 et la revendication 9, **caractérisé en ce que** le rapport R1 est sensiblement égal à 0,7 et le rapport R2 est sensiblement égal à 0,5.

11. Rotor selon la revendication 8 et la revendication 9, **caractérisé en ce que** le rapport R1 est sensiblement égal à 0,5 et le rapport R2 est sensiblement égal à 1,6.

12. Machine électrique tournante, **caractérisé en ce qu'**elle comporte un rotor (1) selon l'une quelconque des revendications précédentes.

13. Machine électrique tournante selon la revendication 12, **caractérisé en ce que** ladite machine électrique tournante est une machine réversible.

14. Machine électrique tournante selon la revendication 12, **caractérisé en ce que** ladite machine électrique tournante est un moteur de compresseur de climatisation électrique.

**Patentansprüche**

1. Rotor (1) für eine drehende elektrische Maschine, der eine Vielzahl von Nordpolen (N) und Südpolen (S) enthält, die sich abwechseln und ausgehend von einer Vielzahl von Dauermagneten (3) gebildet werden, die in ersten Aussparungen (4) angeordnet sind, die sich axial verlängern und gleichmäßig zwischen einem Umfangsbereich (5) und einem Zentralbereich (6) der magnetischen Masse (2) des Rotors (1) verteilt sind, um eine Vielzahl von Umfangspolabschnitten (10) zu definieren, wobei die ersten Aussparungen (4) durch zentrale Zungen (9) einer Dicke E getrennt werden, wobei die Dauermagnete (3) einen polygonalen Radialschnitt aufweisen, der einen im Wesentlichen rechtwinkligen Bereich (8) nahe dem Umfangsbereich (5) angrenzend an einen im Wesentlichen trapezförmigen Bereich (7) nahe dem Zentralbereich (6) aufweist, so dass ein Teil des Dauermagnets (3) nahe dem Zentralbereich (6) des Rotors eine Keilform aufweist, wobei die zentralen Zungen (9) Trennwände bilden und die Dicke E konstant ist, wobei die Polabschnitte (10) zwei Längsseiten (100) enthalten, die sich zu beiden Seiten des im Wesentlichen rechtwinkligen Bereichs (8) der Magnete (3) erstrecken,

**dadurch gekennzeichnet, dass** ein Verhältnis R0=h/E einer ersten Höhe h des trapezförmigen Bereichs (7) zur Dicke E einer zentralen Zunge (9) vorbestimmt ist, um die Flusslecks durch den Zentralbereich zu minimieren und es gleichzeitig ermöglicht, gegenüber den mechanischen Beanspruchungen fest zu sein, insbesondere, wenn die elektrische Maschine sich mit hohen Geschwindigkeiten dreht, wobei das Verhältnis R0 zwischen 1,9 und 7, insbesondere zwischen 2 und 6, zum Beispiel zwischen 3 und 5 liegt.

2. Rotor nach Anspruch 1, **dadurch gekennzeichnet, dass** das Verhältnis R0 im Wesentlichen gleich 3,14 ist.

3. Rotor nach Anspruch 1, **dadurch gekennzeichnet, dass** das Verhältnis R0 im Wesentlichen gleich 5,36 ist.

4. Rotor nach einem der Ansprüche 1 bis 3, **dadurch gekennzeichnet, dass** eine erste Aussparung (4) mittels einer Öffnung (12) am Umfangsbereich (5) mündet, die einen Umfangspolabschnitt (10) von einem benachbarten Umfangspolabschnitt (10) trennt, wobei die zwei Umfangspolabschnitte (10) erste und zweite einander gegenüberliegende Füße (13, 14) bilden, die geeignet sind, einen Dauermagnet (3) in der ersten Aussparung (4) zu halten, wobei die Füße (13, 14) eine Unterseite (130, 140) aufweisen, wobei die Polabschnitte (10) zwei Längsseiten (100) aufweisen und eine kreisförmige Aussparung (18) im Bereich der Verbindung (15) zwischen jeder Längsseite (100) und der Unterseite (130, 140) eines Fußes (13, 14) haben.

5. Rotor nach Anspruch 4, **dadurch gekennzeichnet, dass** eine kreisförmige Aussparung (18) an der Verbindung (15) der Längsseite (100) und der Unterseite (130, 140) entsteht und sich entlang der Längsseite (100) des Polabschnitts (100) erstreckt.

6. Rotor nach Anspruch 4, **dadurch gekennzeichnet, dass** eine kreisförmige Aussparung (18) an der Verbindung (15) der Längsseite (100) und der Unterseite (130, 140) entsteht und sich entlang der Unterseite (130, 140) eines Fußes (13, 14) erstreckt.

7. Rotor nach Anspruch 4, **dadurch gekennzeichnet, dass** eine kreisförmige Aussparung (18) so definiert ist, dass ihre Mitte (C) sich im Bereich der Verbindung (15) der Längsseite (100) eines Polabschnitts (10) und der Unterseite (130, 140) eines Fußes (13, 14) befindet.

8. Rotor nach einem der Ansprüche 5 bis 7, **dadurch gekennzeichnet, dass** ein Verhältnis R1 des Durchmessers (D1) der kreisförmigen Aussparung (18) zur Höhe (E1) eines Fußes (13, 14) zwischen 0,4 und 1 liegt.

9. Rotor nach einem der Ansprüche 4 bis 8, **dadurch gekennzeichnet, dass** ein Verhältnis R2 der Höhe (E1) eines Fußes (13, 14) zur Breite (L1) eines Fußes (13, 14) zwischen 0,4 und 2 liegt.

10. Rotor nach Anspruch 8 und Anspruch 9, **dadurch gekennzeichnet, dass** das Verhältnis R1 im Wesentlichen gleich 0,7 und das Verhältnis R2 im Wesentlichen gleich 0,5 ist.

11. Rotor nach Anspruch 8 und Anspruch 9, **dadurch gekennzeichnet, dass** das Verhältnis R1 im Wesentlichen gleich 0,5 und das Verhältnis R2 im Wesentlichen gleich 1,6 ist.

12. Drehende elektrische Maschine, **dadurch gekennzeichnet, dass** sie einen Rotor (1) nach einem der vorhergehenden Ansprüche aufweist.

13. Drehende elektrische Maschine nach Anspruch 12, **dadurch gekennzeichnet, dass** die drehende elektrische Maschine eine reversible Maschine ist.

14. Drehende elektrische Maschine nach Anspruch 12, **dadurch gekennzeichnet, dass** die drehende elektrische Maschine ein Motor eines elektrischen Klimakompressors ist.

## Claims

1. Rotor (1) for rotary electric machine, comprising a plurality of North (N) and South (S) poles that are alternate and are formed from a plurality of permanent magnets (3) arranged in first recesses (4) which extend axially and are distributed regularly between a circumferential part (5) and a central part of (6) of the magnetic mass (2) of said rotor (1) so as to define a plurality of circumferential polar sections (10), said first recesses (4) being spaced apart by central tabs (9) of thickness E, said permanent magnets (3) having a polygonal radial section which comprises an essentially rectangular part (8) close to said circumferential part (5) adjacent to an essentially trapezoidal part (7) close to said central part (6), such that a part of the permanent magnet (3) close to the central part (6) of the rotor comprises a wedge shape, said central tabs (9) forming partitions and the thickness E being constant, the polar sections (10) comprising two longitudinal faces (100) that extend on either side of the essentially rectangular part (8) of the magnets (3),

**characterized in that** a ratio R0=h/E of a first height h of said trapezoidal part (7) over the thickness E of a central tab (9) is predetermined so as to minimize flux leakage via the central part while being able to withstand mechanical stresses, in particular when the electric machine is rotating at high speeds, the ratio R0 being between 1.9 and 7, in particular between 2 and 6, for example between 3 and 5.

2. Rotor according to Claim 1, **characterized in that** the ratio R0 is essentially equal to 3.14.

3. Rotor according to Claim 1, **characterized in that** the ratio R0 is essentially equal to 5.36.

4. Rotor according to any one of Claims 1 to 3, **characterized in that** a first recess (4) opens onto the circumferential part (5) via the intermediary of an opening (12) that separates a circumferential polar section (10) from an adjacent circumferential polar section (10), the two circumferential polar sections (10) forming first and second feet (13, 14) that face another and are designed to hold a permanent magnet (3) in said first recess (4), said feet (13, 14) comprising an inferior face (130, 140), said polar sections (10) comprising two longitudinal faces (100) and having a circular recess (18) at the join (15) between each longitudinal face (100) and the inferior face (130, 140) of a foot (13, 14).

5. Rotor according to Claim 4, **characterized in that** a circular recess (18) begins at the join (15) of said longitudinal face (100) and said inferior face (130, 140) and extends along the longitudinal face (100) of the polar section (100).

6. Rotor according to Claim 4, **characterized in that** a circular recess (18) begins at the join (15) of said longitudinal face (100) and said inferior face (130, 140) and extends along the inferior face (130, 140) of a foot (13, 14).

7. Rotor according to Claim 4, **characterized in that** a circular recess (18) is defined such that its centre (C) is located at the join (15) of said longitudinal face (100) of a polar section (10) and said inferior face (130, 140) of a foot (13, 14).

8. Rotor according to any one of Claims 5 to 7, **characterized in that** a ratio R1 of the diameter (D1) of the circular recess (18) over the height (E1) of a foot (13, 14) is between 0.4 and 1.

9. Rotor according to any one of Claims 4 to 8, **characterized in that** a ratio R2 of the height (E1) of a foot (13, 14) over the width (L1) of a foot (13, 14) is between 0.4 and 2.

10. Rotor according to Claim 8 and Claim 9, **characterized in that** the ratio R1 is essentially equal to 0.7 and the ratio R2 is essentially equal to 0.5.

11. Rotor according to Claim 8 and Claim 9, **characterized in that** the ratio R1 is essentially equal to 0.5 and the ratio R2 is essentially equal to 1.6.

12. Rotary electric machine, **characterized in that** it comprises a rotor (1) according to any one of the preceding claims.

13. Rotary electric machine according to Claim 12, **characterized in that** said rotary electric machine is a reversible machine.

14. Rotary electric machine according to Claim 12, **characterized in that** said rotary electric machine is a motor for an electric air-conditioning compressor.

$$3 \leq R0 = h/E \leq 5$$

Fig. 1

Fig. 2

Fig. 3

Fig. 4

$$0,4 \leq R2 = E1/L1 \leq 2$$

$$0,4 \leq R1 = D1/E1 \leq 1$$

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2982093
- US 2013009505 A
- US 2013278108 A
- FR 2953658